# EUROPÄISCHE PATENTSCHRIFT

(11) **EP 2 050 795 B1**
(45) Veröffentlichungstag und Bekanntmachung des Hinweises auf die Patenterteilung: **12.06.2013**
(21) Anmeldenummer: 08161216.0
(22) Anmeldetag: 25.07.2008
(51) Int. Cl.: C09D 5/02, C09D 5/04, C09D 5/28, C09D 7/12, B05D 5/02

(54) **Verwendung eines mineralischen Granulats als Strukturkorn in Strukturfarben sowie Strukturfarbe enthaltend das Strukturkorn**
Use of a mineral granulate as structure grain in structure paints and structure paint containing the structure grain
Utilisation d'un granulé minéral en tant que grain structurel dans des couleurs structurelles et couleur structurelle comprenant ce grain structurel

(30) Priorität: 18.10.2007 DE 102007049952
(43) Veröffentlichungstag der Anmeldung: 22.04.2009
(73) Patentinhaber: Xella Baustoffe GmbH, 47259 Duisburg (DE)
(72) Erfinder: Walther, Hartmut, Dr., 14806 Belzig (DE)
(74) Vertreter: Solf, Alexander

(56) Entgegenhaltungen:
- EP-A1- 0 007 586
- EP-A2- 1 484 294

## Beschreibung

Die Erfindung betrifft die Verwendung eines mineralischen Granulats als Strukturkorn in Strukturfarben sowie Strukturfarbe enthaltend das Strukturkorn.

Die Erfindung befasst sich nicht mit Farben, die farbgebende Strukturelemente enthalten, sondern mit Farben, die eine raumformmäßig raue Oberflächenstruktur haben.

Strukturfarben im Sinne der Erfindung sind somit Farben, insbesondere Dispersionsfarben auf Wasserbasis, denen Partikel beigemischt sind, die eine Rauigkeit der mit der Farbe versehenen Oberfläche erzeugen. Diese Farben werden in der Regel als Wand- und Deckenfarben im Innenbereich von Bauwerken eingesetzt. Strukturfarben dieser Art können aber auch auf der Basis von Reinsilikatfarben oder Dispersionssilikatfarben od. dgl. beruhen.

Farben bestehen grundsätzlich aus den Komponenten Bindemittel, Lösemittel bzw. Verdünnungsmittel, Pigmenten und Zusatzmitteln. Lösungsmittel halten Bindemittel und Pigmente in flüssigem Zustand und verdunsten nach dem Auftrag der Farbe, wobei die Farbe fest und trocken wird. Bindemittel verbinden die Pigmente mit dem Untergrund. Zusatzmittel gewährleisten z. B. die Konservierung, bestimmte Viskositäten der auftragsfähigen Farbe oder Elastizität der getrockneten Farbe an der Wand.

Strukturfarben enthalten zusätzlich Zusatzstoffe, wie Sandkörner oder Kalksteinkörner oder andere mineralische Körnungen, die einen dickeren Anstrich mit einer gewünscht groben bzw. rauen Struktur in der Oberfläche ergeben. Strukturfarben haben im Vergleich zu anderen Farben den zusätzlichen Vorteil, Risse und kleinere Unebenheiten zu verdecken.

In der DE 696 22 040 T2 wird der Stand der Technik bezüglich Wandfarben angegeben. Demgemäß enthalten derartige Farben auch Füllmittel natürlicher Substanzen wie Calciumcarbonat, Calcite, Talkum, Gips, Sand und Quarzite.

Aus dem deutschen Gebrauchsmuster 203 13 201 U1 sind Farben auf Basis von Polymerdispersionen bekannt, die als Füllstoffe Silikate, Carbonate, Flussspatsulfate und Oxide enthalten, wobei insbesondere Kaolin, Glimmer, Talkum und Calciumcarbonat vorgeschlagen werden. Diese Füllstoffe sollen Korngrößen zwischen 0,1 und 200 µm aufweisen, wobei die Korngröße zur Steuerung der Viskosität der Farbe funktionalisiert werden soll.

Die EP 1 484 294 A2 beschreibt eine Bauplatte aus einer Fasermatte, die eine z. B. 2 bis 8 mm dicke Beschichtung aufweist. Die Beschichtung enthält poröse Partikel, einen Silikabinder, ein organisches Polymer und einen Verdicker. Die porösen Partikel können aus Tobermorit mit Korndurchmessern zwischen 0,5 und 1 mm bestehen. Als Binder wird ein wasserhaltiges Polysilikat und als organisches Polymer ein Styrolacrylat vorgeschlagen. Der Verdicker kann eine hochmolekulare Polysaccharose sein. Die Beschichtung kann außerdem ein Pigment enthalten. Sinn und Zweck der Beschichtung ist, einen hohlen Feuerwiderstand und eine geringe Wärmeleitung zu gewährleisten.

Die EP 007 586 A1 beschreibt die Herstellung eines Leichtzuschlagstoffes mit hohem Weißheitsgrad in Form von Calciumsilikatgranulaten bzw. -pulvern mit Mikroporenstruktur durch Umsetzen von kristallinem und ggf. amorphem Siliciumdioxid mit Calciumoxid. Diese Rohstoffe werden in einem Mischer in Wasser dispergiert, wobei ein mikroporöser Schaum zugeführt wird. Diese Mischung wird autoklaviert und das gehärtete Produkt zerkleinert, getrocknet und klassiert. In Pulverform soll sich der erzeugte Leichtzuschlagstoff als Zusatzstoff für Anstrichfarben eignen.

Handelsübliche Strukturfarben mit einem rauen Struktureffekt weisen in der Regel Strukturkorn aus Kalkstein, Marmor oder Quarzsand auf. Farben mit diesen Strukturkörnern lassen sich aber nicht so einfach auftragen. Größere Körner lösen sich außerdem leicht aus der getrockneten Farbe, weshalb einem Zusatz von relativ grobem Korn Grenzen gesetzt sind. Ein wesentlicher Nachteil aber ist, dass sich die Strukturkörner nicht optimal so dick mit Farbe bedecken lassen, wie die anderen Bereiche der Wandung neben den Körnern, so dass die Farbwirkung verändert wird. Insofern ist es für die Anwendung kaum möglich, gleich abgetönte Farben mit und ohne Struktureffekt zu erhalten.

Aufgabe der Erfindung ist, ein Strukturkorn aufzufinden, das eine bessere Benetzbarkeit mit der Farbe und damit eine gute Farbdeckung gewährleistet. Zudem soll das Strukturkorn auch als grobes Korn abriebfester in der getrockneten Farbe einbindbar, leicht mit der flüssigen Farbe mischbar und sedimentationsbeständig sein.

Diese Aufgabe wird durch die Merkmale des Anspruchs 1 und 14 gelöst. Vorteilhafte Weiterbildungen der Erfindung werden in den Unteransprüchen gekennzeichnet.

Die Erfindung sieht somit die Verwendung eines porosierten hydrothermal gehärteten Calciumsilikathydratgranulats vor. Ein solches Produkt weist durch die Porosierung erzeugte Makroporen und durch Wasserverdrängung und Kristallisation im Hydrothermalprozess entstandene Mikroporen auf. Das Calciumsilikathydratgranulatmaterial wird hydrothermal nach der an sich bekannten Porenbeton- oder Schaumbetontechnologie aus einem wässrigen Schlicker hergestellt, der zumindest eine feinteilige im Hydrothermalprozess reaktionsfähige SiO₂-Komponente und eine feinteilige im Hydrothermalprozess reaktionsfähige CaO-Komponente aufweist. Das hydrothermal gehärtete Produkt, das auch ein Abfallprodukt der Porenbeton- oder Schaumbetonherstellung sein kann, wird zerkleinert und klassiert und z. B. als Gebinde abgepackt und als Zusatzstoff zur Herstellung von Strukturfarben auf den Markt gebracht oder einem gefüllten Farbbehältnis beigestellt. Die Mischung mit der Farbe kann dann individualisiert vor Ort erfolgen. Des Weiteren kann aber auch eine Mischung des Strukturgranulats im Farbherstellerwerk erfolgen und die fertige angemischte Strukturfarbe im geschlossenen Behälter angeliefert werden.

Erfindungsgemäß wird das Strukturgranulat aus Poren- oder Schaumbeton hergestellt, der Druckfestigkeiten nach DIN V 4165 aufweist zwischen 1 und 6 N/mm², insbesondere zwischen 1,6 und 4,5 N/mm² sowie Rohdichten zwischen 250 und 600 kg/m², insbesondere zwischen 330 und 500 kg/m³ aufweist. Die Körnungen liegen vorzugsweise zwischen 5 µm und 4 mm, insbesondere zwischen 5 µm und 2 mm. Der Anteil an Mikroporen sollte größer 22 vol.-% und nicht mehr als 55 Vol-% betragen, insbesondere von 25 bis 35 vol.-%. Dies hat folgenden Grund: Die Mikroporen selbst unterscheiden sich noch einmal in grobe Mikroporen (r=0,5 - 50 µm), Kapillarporen (r=30 - 500 nm) und Gelporen (r<30 nm). Der Anteil an Kapillar- und Gelporen beträgt dabei ein Vielfaches des Anteils an groben Mikroporen und gerade diese sowie die feinen Makroporen werden für die feste Einbindung des Kornes in die Farbmatrix benötigt. Die Makroporen besitzen einen Radius zwischen 50 und 1000 µm und einen Anteil von 15 bis 64 vol.-%, vorzugsweise von 40 bis 60 vol-%, besonders > 40 Vol-%, von > 50 Vol-%.

Das Granulat weist zweckmäßigerweise eine Restfeuchte z. B. zwischen 6 und 40, insbesondere zwischen 8 und 25 Gew. -% auf.

Aufgrund der Restfeuchte und der besonderen Porenstruktur ist das Granulat in der Lage, oberflächlich und im Innern der Porenräume Farbe zu adsorbieren, woraus eine besonders gute Benetzung und Haftung sowie eine relativ dicke Beschichtung der Granulatkörner mit Farbe resultieren. Dabei kann mit der Restfeuchte, die Porenraum besetzt hält, die Farbmenge gesteuert werden, die adsorbiert werden soll.

Das Calciumsilikathydratgranulat ist weiß bis grauweiß, so dass eine Farbverfälschung durch den Zusatz des Granulats nicht merklich erfolgt. Auf der Baustelle kann so bereits abgetönte Farbe noch zusätzlich mit Struktureffekten versehen und im direkten Anschluss verarbeitet werden.

Die Bindekräfte zwischen der flüssigen Farbe und dem Granulat sind überraschend hoch, so dass im Zusammenwirken mit seiner relativ geringen aus der Porosität resultierenden Rohdichte das Granulat nicht zur Sedimentation neigt und die Farbe langzeitig verwendbar bleibt bzw. leicht aufgerührt werden kann. Offenbar resultiert dies aus der Porengrößenverteilung im Porenbetonkorn, das eine Porengrößenlücke zwischen den bis etwa 300 nm Radius groben Gel- und Kapillar-Mikroporen und den bei etwa 3000 nm Radius beginnenden groben Mikroporen aufweist. Das Einmischen ist ebenfalls einfach, weil das Granulat die Farbe aufgrund seiner Kapillarität gut annimmt und bindet. Im getrockneten Zustand der Farbe an einer Wand wird das Granulat von der Farbe relativ fest gehaltert aufgrund der Verkrallung der Farbe in der oberflächlichen Porenstruktur der Granulatkörner.

Die Zusatzmenge und die Kornbänder des Granulats sind auf einfache Weise auf den gewünschten Struktureffekt abstimmbar.

Die Calciumsilikathydratgranulate fallen als Rohstoff, z. B. bei der Porenbeton- oder Schaumbetonherstellung als Abfallprodukte nach der Hydrothermalhärtung an. Sie bestehen im Wesentlichen aus einer Tobermorit-Gerüststruktur, die die Makroporen umgibt, wobei sich die Mikroporen in der Gerüststruktur befinden.

Sofern das Abfallgranulat nicht die gewünschte Kornverteilung aufweist, wird es gebrochen und klassiert und kann mit bestimmten Kornbändern z. B. alles < 1,8 mm, insbesondere < 1,2 mm oder anderen Kornbändern individualisiert zusammengestellt werden. Das Granulat weist eine Gauss'sche Konverteilung in Korngrößenbereich zwichen 0,1 und 1,0 mm auf. Dabei ist es zweckmäßig, immer einen bestimmte Anteil an Feinmaterial in Kombination mit grobem Material zu verwenden, weil das Feinmaterial in überraschender Weise die Abriebfestigkeit der Farbe insgesamt erhöht und auch den Abrieb der groberen Körner behindert. Das Feinmaterial sollte Korngrößen zwischen 5 und 500 µm in Mengen von 40 bis 75 Gew.-% aufweisen. Es wird z. B. mit einem Grobmaterial mit Korngrößen zwischen 0,5 und 2,0 mm gemischt, wobei nach der Erfindung auch Körnungslücken zwischen dem Fein- und Grobkorn vorliegen können, d. h., dass das größte Korn des Feinkorns kleiner ist als das feinste Korn des Grobkorns, wobei aber auch geringe Menge sich überschneidender Korngrößen im Lückenbereich vorhanden sein können. Letztere sollten zweckmäßigerweise 15 Gew.-% in der Summe nicht überschreiten.

Vorzugsweise wird das Calciumsilikathydratgranulat in luft- und wasserdichten Gebinden vorgehalten, damit eine Verklumpung vorhindert und insbesondere der voreingestellte Wassergehalt beibehalten werden kann.

Handelsübliche Strukturfarben haben einen Nachteil, den die Kunden meist erst nach Jahren feststellen: Die einmal erzeugte Oberflächenstruktur lässt sich nur sehr schwer wieder entfernen. Diesen Nachteil weist eine erfindungsgemäß hergestellte Strukturfarbe nicht auf. Weil die eingesetzten Strukturkörner relativ mürbe sind und somit nur eine geringe Schleifhärte besitzen, kann eine solche Farbe ohne großen Aufwand manuell mittels eines vom Maler beim Spachteln verwendeten Schleifbretts wieder entfernt werden.

## Patentansprüche

1. Verwendung eines mineralischen Granulats als Strukturkorn in einer Innenraumwandfarbe zur Erzielung eines rauen Struktureffekts,
**dadurch gekennzeichnet,**
**dass** das Granulat ein porosiertes, hydrothermal gehärtetes, vorzugsweise im Wesentlichen aus Tobermorit bestehendes, Makro- und Mikroporen aufweisendes Calciumsilikathydratgranulat ist und dass das Granulat eine Gauss'sche Kornverteilung im Korngrößenbereich zwischen 0,1 und 1,0 mm aufweist, wobei die Granulatkörner eine Tobermorit-Gerüststruktur aufweisen, die die Makroporen umgibt, die Mikroporen die Gerüststruktur durchsetzen und die Granulatkörner Makroporen in einer Menge von 15 bis 65 Vol.-% und Mikroporen in einer Menge von 22 bis 55 Vol.-% aufweisen.

2. Verwendung nach Anspruch 1,
**dadurch gekennzeichnet,**
**dass** die Innenraumwandfarbe eine Dispersionsfarbe ist.

3. Verwendung nach Anspruch 1,
**dadurch gekennzeichnet,**
**dass** das Granulat ein hydrothermal gehärtetes Abfallprodukt einer Porenbeton- oder Schaumbetonproduktion ist.

4. Verwendung nach Anspruch 3,
**dadurch gekennzeichnet,**
**dass** das Granulat Korndruckfestigkeiten zwischen 1 und 6 N/mm² aufweist.

5. Verwendung nach Anspruch 4,
**dadurch gekennzeichnet,**
**dass** das Granulat Korndruckfestigkeiten zwischen 1,6 und 4,5 N/mm² aufweist.

6. Verwendung nach einem oder mehreren der Ansprüche 1 bis 5,
**dadurch gekennzeichnet,**
**dass** das Granulat Rohdichten zwischen 250 und 600 kg/m³ aufweist.

7. Verwendung nach Anspruch 6,
**dadurch gekennzeichnet,**
**dass** das Granulat Rohdichten zwischen 330 und 500 kg/m³ aufweist.

8. Verwendung nach einem oder mehreren der Ansprüche 1 bis 7,
**dadurch gekennzeichnet,**
**dass** das Granulat mindestens zwei unterschiedliche voneinander durch eine Körnungslücke unterscheidbare Gauss'sche Kornverteilungen aufweist.

9. Verwendung nach Anspruch 1,
**dadurch gekennzeichnet,**
**dass** die Granulatkörner Makroporen in einer Menge von 40 bis 60 Vol.-% aufweisen.

10. Verwendung nach Anspruch 1,
**dadurch gekennzeichnet,**
**dass** die Granulatkörner Mikroporen in einer Menge von 25 bis 35 Vol.-% aufweisen.

11. Verwendung nach einem oder mehreren der Ansprüche 1 bis 10,
**dadurch gekennzeichnet,**
**dass** das Granulat eine Restfeuchte zwischen 6 und 40 Gew.-% aufweist.

12. Verwendung nach Anspruch 11,
**dadurch gekennzeichnet,**
**dass** das Granulat eine Restfeuchte zwischen 8 und 25 Gew.-% aufweist.

13. Verwendung nach einem oder mehreren der Ansprüche 1 bis 12,
**dadurch gekennzeichnet,**
**dass** das Granulat einen Feinkornanteil mit Korngrößen unter 500 µm in Mengen von 40 bis 75 Gew.-% aufweist.

14. Strukturfarbe in flüssiger Form zumindest aufweisend ein Bindemittel, Pigmente, Lösemittel und ein Zusatzmittel,
**gekennzeichnet durch**
ein Strukturkorngranulat, wie es in einem oder mehreren der Ansprüche 1 bis 13 angegeben ist.

15. Strukturfarbe in fester Form aufweisend zumindest ein erhärtetes Bindemittel, Pigmente und ggf. ein Zusatzmittel,
**gekennzeichnet durch**
ein Strukturkorngranulat, wie es in einem oder mehreren der Ansprüche 1 bis 13 angegeben ist.

## Claims

1. Use of a mineral granulate as a texturing grain in an interior wall paint, for achieving a rough textured effect,
**characterised in that**
the granulate is a porous hydrothermally hardened calcium silicate hydrate granulate having macropores and micropores and preferably substantially comprising tobermorite, and **in that** the granulate has a Gaussian grain size distribution in the grain size range between 0.1 and 1.0 mm, wherein the granulate grains have a tobermorite crystal structure which surrounds the macropores, the micropores occur throughout the crystal structure and the granulate grains have macropores in a quantity of 15 to 65% by volume and micropores in a quantity of 22 to 55% by volume.

2. Use according to Claim 1, **characterised in that** the interior wall paint is an emulsion paint.

3. Use according to Claim 1, **characterised in that** the granulate is a hydrothermally hardened waste product from the production of cellular concrete or aerated concrete.

4. Use according to Claim 3, **characterised in that** the granulate has grain compressive strengths of between 1 and 6 N/mm².

5. Use according to Claim 4, **characterised in that** the granulate has grain compressive strengths of between 1.6 and 4.5 N/mm².

6. Use according to one or more of Claims 1 to 5, **characterised in that** the granulate has bulk densities of between 250 and 600 kg/m³.

7. Use according to Claim 6, **characterised in that** the granulate has bulk densities of between 330 and 500 kg/m³.

8. Use according to one or more of Claims 1 to 7, **characterised in that** the granulate has at least two different Gaussian grain size distributions which may be differentiated from one another as a result of a gap in the grain sizes.

9. Use according to Claim 1, **characterised in that** the granulate grains have macropores in a quantity of from 40 to 60% by volume.

10. Use according to Claim 1, **characterised in that** granulate grains have micropores in a quantity of from 25 to 35% by volume.

11. Use according to one or more of Claims 1 to 10, **characterised in that** the granulate has a residual moisture content of between 6 and 40% by weight.

12. Use according to Claim 11, **characterised in that** the granulate has a residual moisture content of between 8 and 25% by weight.

13. Use according to one or more of Claims 1 to 12, **characterised in that** the granulate has a fine grain fraction having grain sizes below 500 µm in quantities of between 40 and 75% by weight.

14. A textured paint in liquid form, at least having a binder, pigments, solvents and an additive,
**characterised by**
a texturing grain granulate as specified in one or more of Claims 1 to 13.

15. A textured paint in solid form, having at least a solidified binder, pigments and where appropriate an additive,
**characterised by**
a texturing grain granulate as specified in one or more of Claims 1 to 13.

## Revendications

1. Utilisation d'un granulé minéral en tant que grain structurel dans une peinture pour mur intérieur afin d'obtenir un effet structuré brut,
**caractérisé en ce que**
le granulé est un granulé hydraté de silicate de calcium poreux, durci de manière hydrothermale, de préférence constitué essentiellement de tobermorite, présentant des macropores et des micropores, et **en ce que** le granulé présente une répartition granulométrique selon la loi de Gauss située dans la plage granulométrique comprise entre 0,1 et 1 mm, dans lequel les granulés présentent une structure de squelette de tobermorite, laquelle entoure les macropores, les micropores traversent la structure de squelette et les granulés présentent des macropores en une quantité allant de 15 à 65 % en vol. et des micropores en une quantité allant de 22 à 55 % en vol.

2. Utilisation selon la revendication 1,
**caractérisée en ce que**
la peinture pour mur intérieur est une peinture de dispersion.

3. Utilisation selon la revendication 1,
**caractérisée en ce que**
le granulé est un déchet durci de manière hydrothermale d'une production de béton poreux ou de béton mousse.

4. Utilisation selon la revendication 3,
**caractérisée en ce que**
le granulé présente des résistances à la compression des granulés comprises entre 1 et 6 N/mm².

5. Utilisation selon la revendication 4,
**caractérisée en ce que**
le granulé présente des résistances à la compression des granulés comprises entre 1,6 et 4,5 N/mm².

6. Utilisation selon l'une quelconque ou plusieurs des revendications 1 à 5,
**caractérisée en ce que**
le granulé présente des densités apparentes comprises entre 250 et 600 kg/m³.

7. Utilisation selon la revendication 6,
**caractérisée en ce que**
le granulé présente des densités apparentes comprises entre 330 et 500 kg/m³.

8. Utilisation selon l'une quelconque ou plusieurs des revendications 1 à 7,
**caractérisée en ce que**
le granulé présente au moins deux répartitions granulométriques gaussiennes différentes pouvant être différenciées l'une de l'autre grâce à une lacune granulométrique.

9. Utilisation selon la revendication 1,
**caractérisée en ce que**
les granulés présentent des macropores en une quantité comprise entre 40 et 60 % en vol.

10. Utilisation selon la revendication 1,
**caractérisée en ce que**
les granulés présentent des micropores en une quantité comprise entre 25 et 35 % en vol.

11. Utilisation selon l'une quelconque ou plusieurs des revendications 1 à 10,
**caractérisée en ce que**
le granulé présente une humidité résiduelle comprise entre 6 et 40 % en poids.

12. Utilisation selon la revendication 11,
**caractérisée en ce que**
le granulé présente une humidité résiduelle comprise entre 8 et 25 % en poids.

13. Utilisation selon l'une quelconque ou plusieurs des revendications 1 à 12,
**caractérisée en ce que**
le granulé présente une proportion en grains fins avec des tailles de grain inférieures à 500 µm en des quantités comprises entre 40 et 75 % en poids.

14. Peinture structurée sous une forme fluide présentant au moins un liant, des pigments, des solvants et un additif,
**caractérisée par**
un granulé structurel tel qu'il est indiqué dans l'une quelconque ou plusieurs des revendications 1 à 13.

15. Peinture structurée sous une forme solide présentant au moins un liant durci, des pigments et éventuellement un additif,
**caractérisée par**
un granulé structurel, tel qu'il est indiqué dans l'une ou plusieurs des revendications 1 à 13.
